Europäisches Patentamt

**European Patent Office**

Office européen des brevets

(11) Numéro de publication: **0 314 586**
**A2**

(12) # DEMANDE DE BREVET EUROPÉEN

(21) Numéro de dépôt: **88420365.4**

(22) Date de dépôt: **26.10.88**

(51) Int. Cl.⁴: **C 08 L 67/02**
C 08 K 3/30
//(C08L67/02,83:04)

(30) Priorité: **27.10.87 BR 8705882**

(43) Date de publication de la demande:
**03.05.89 Bulletin 89/18**

(84) Etats contractants désignés:
**AT BE CH DE ES FR GB GR IT LI LU NL SE**

(71) Demandeur: **RHONE-POULENC CHIMIE**
**25, quai Paul Doumer**
**F-92408 Courbevoie Cédex (FR)**

(72) Inventeur: **Fernandes-Marlet, José Maria**
**Rue Arthur Prado, 492**
**Bela Vista - Sao Paulo (BR)**

**Bartholomeu de Barros, Claudio**
**Av. Sao Carlos, 2830**
**Sao Carlos (BR)**

**Bolsoni de Camargo, Joao**
**Rue Mesquita, 824**
**Jardim Gloria Sao Paulo (BR)**

(74) Mandataire: **Trolliet, Maurice et al**
**RHONE-POULENC INTERSERVICES Service Brevets**
**Chimie Centre de Recherches des Carrières B.P. 62**
**F-69192 Saint-Fons Cédex (FR)**

(54) **Compositions thermoplastiques et procédé d'obtention desdites compositions.**

(57) L'invention comprend un procédé d'obtention de compositions à base de polyester. On rajoute au matériau polymérique, du bisulfure molybdène et de l'huile de silicone, lesquels agissent de manière synergique par rapport aux propriétés physiques d'abrasion et de frottement de la composition finale.

EP 0 314 586 A2

**Description**

## COMPOSITIONS THERMOPLASTIQUES ET PROCEDE D'OBTENTION DESDITES COMPOSITIONS

La présente invention a trait aux compositions de polyesters et notamment aux polytéréphtalates d'alkylène, caractérisées en ce que leurs propriétés sont jusqu'à présent inégalables, au regard de l'état de la technique.

Les thermoplastiques, en particulier les polytéréphtalates d'alkylène, sont bien connus pour leur utilisation pour le moulage de pièces. On utilise ces temps derniers de plus en plus des additifs permettant d'adapter ces produits aux applications désirées. Par exemple, pour diminuer la contraction d'une pièce moulée le moulage, on a la possibilité d'utiliser une charge minérale qui a pour effet d'accroître la rigidité et la dureté. De même, on peut utiliser toute une gamme d'additifs : les anti-oxydants, les colorants, les agents ignifugeants, les séquestrants, les protecteurs anti-radiations UV, etc.

Quelques additifs parviennent ainsi à valoriser certaines propriétés des plastiques, de telle sorte que l'on peut utiliser ces compositions au lieu de plastiques plus "nobles" et normalement plus chers. C'est sur ce domaine que porte la présente invention.

Le polyacétal et le nylon 11 sont des thermoplastiques normalement indiqués pour des applications qui nécessitent une bonne rigidité mécanique, un coefficient de frottement peu élevé et une bonne résistance à l'abrasion.

Pendant le traitement à chaud, le polyacétal exhale une forte odeur de formaldéhyde très toxique par inhalation, et l'on connaît des cas dans lesquels son utilisation provoque une explosion dans le cylindre de l'injecteur.

Le nylon 11 a pour inconvénient d'avoir une stabilité dimensionnelle peu élevée, étant donné qu'il absorbe l'humidité jusqu'à plus de 3 % de son poids.

Les compositions de la présente invention peuvent remplacer le polyacétal et le nylon 11 dans leurs applications, avec les avantages de ne pas exhaler de fortes odeurs toxiques pendant leur traitement, de ne pas être explosifs et d'avoir un degré de stabilité dimensionnelle élevé.

Au cours de ses recherches, la Demanderesse a découvert une composition qui, de façon surprenante, permet d'obtenir des améliorations générales des propriétés des polyesters, notamment des polytéréphtalates d'alkylène, et en particulier un coefficient de frottement moins élevé et une meilleure résistance à l'abrasion.

La présente invention concerne en effet des compositions à base de polyester thermoplastique caractérisée en ce qu'elles contiennent de l'huile de silicone et du bisulfure de molybdène.

On entend par compositions à base de polyester thermoplastique, toute composition qui utilise au moins un polyester homo ou copolymère, de préférence un polytéréphtalate d'alkylène. Un polytéréphtalate d'alkylène avantageusement utilisé pour les compositions de la présente invention est le PBT (polytéréphtalate de butylène).

Selon l'invention, les compositions de PBT conviennent particulièrement au remplacement des polyacétals et du nylon 11 ; par exemple, pour des pièces de grande précision telles que des engrenages, des aspersoirs de liquides, etc. ; ses propriétés s'étant généralement améliorées, notamment l'autolubrification, la stabilité dimensionnelle, une plus grande résistance à l'abrasion et un coefficient de frottement moins élevé.

Les compositions à base de polyester thermoplastique de la présente invention contiennent de l'huile de silicone et du bisulfure de molybdène.

On entend par huile de silicone, un ou plusieurs polymères à base de diorganosiloxanes avec des terminaisons silane contenant ou non des groupements organiques, identiques ou non, associés à la structure du polymère, avec une viscosité propice au traitement de la composition. L'huile de silicone peut, de préférence, être le polydiméthylsiloxane, avec des groupes terminaux tels que, par exemple : acetoxy, amino, alcoxy et autres.

La viscosité de l'huile de silicone peut varier de 100 à 1 000.$10^{-3}$ Pa.s, de préférence de 200 à 700.$10^{-3}$ Pa.s, et de manière avantageuse, entre 250 et 500.$10^{-3}$ Pa.s.

La teneur en huile de silicone employée pour les compositions de l'invention varie entre environ 0,1 et environ 15 %, ou de préférence, d'environ 0,2 et environ 10 %, ou de façon encore plus avantageuse, d'environ 0,3 à environ 8 % (pourcentages par rapport au poids du polyester). Par exemple, pour une huile dont la viscosité est de 350.$10^{-3}$ Pa.s , la teneur maximale en huile semble être de 2 %.

On entend par bisulfure de molybdène le composé proprement dit, introduit tel quel dans la formule de la composition, ou associé à des matériaux qui permettent de l'incorporer, par exemple sous forme de mélange, avec des dérivés d'acides gras, à un point de fusion normalement bas, et un ou plusieurs polymères thermoplastiques, de manière à ne pas modifier sensiblement les propriétés de la composition faisant l'objet de l'invention.

La teneur en bisulfure de molybdène telle qu'employée dans les compositions de l'invention varie entre environ 0,05 et 15 %, de préférence entre environ 0,1 et environ 10 %, et de façon plus avantageuse entre environ 0,2 et environ 6 % (pourcentages par rapport au poids de polyester).

Les teneurs inférieures à 0,1 % et supérieures à 15 % pour l'huile de silicone, et supérieures à 15 % pour le bisulfure de molybdène, entrent dans le champ d'application de l'invention. Cependant, pour des teneurs peu élevées, leur effet est indétectable, alors que pour des teneurs élevées on ne constate aucune amélioration sensible des propriétés, et le traitement de la composition s'avère dans ce cas là difficile.

Selon l'invention, les proportions les plus appropriées entre l'huile de silicone et le bisulfure de molybdène varient entre environ 1:100 et environ 100:1, de préférence entre 1:50 et 50:1, et de manière plus avantageuse de 1: 20 à 20:1 (en poids).

La quantité préférentielle d'utilisation des deux additifs réunis varie approximativement entre 0,15 et 30 %, de préférence entre environ 0,3 et environ 20 % et de façon plus avantageuse entre environ 0,5 et environ 14 % par rapport au poids de polyester.

En outre, l'invention a pour objet le procédé d'obtention de compositions thermoplastiques caractérisé par la capacité de réalisation d'un mélange d'au moins un polyester thermoplastique, d'huile de silicone et de bisulfure de molybdène.

Les compositions de l'invention comprennent au moins un polyester thermoplastique, de l'huile de silicone et du bisulfure de molybdène.

Le procédé d'obtention de ces compositions consiste à injecter le matériau préalablement extrudé, ou en effectuant le mélange au moment de l'injection.

Conviennent par exemple au procédé de l'invention les extrudeuses mono ou bi-vis ayant un profil de vis adapté à un fonctionnement optimal, compte tenu de la composition (le bas coefficient de frottement exige une vitesse moins élevée et un cisaillement bas).

En outre, on peut traiter la composition faisant l'objet de l'invention de manière à obtenir des matrices à forte teneur en additifs (mélange-maîtres), qui seront ensuite diluées jusqu'à l'obtention des proportions préconisées.

L'invention a également pour objet les compositions à base de polyester thermoplastique contenant de l'huile de silicone et du bisulfure de molybdène, caractérisées en ce qu'elles servent au moulage de pièces.

Ces pièces sont par exemple des engrenages de précision, des aspersoirs de liquides, des pièces à raccords de précision, etc., nécessitant une stabilité dimensionnelle, un bas coefficient de frottement et une haute résistance à l'abrasion, et elles sont obtenues par injection.

L'huile de silicone ainsi que le bisulfure de molybdène sont des additifs connus et utilisés dans des compositions de polyesters. Néanmoins, jusqu'à présent, ils n'ont jamais été utilisés ensemble, étant donné qu'ils sont tous deux utilisés pour la lubrification.

L'invention a révélé que la présence simultanée d'huile de silicone et de bisulfure de molybdène dans une composition à base de polyesters favorise l'amélioration généralisée des propriétés de ladite composition de manière synergique ; à savoir, les effets de la présence conjointe de ces additifs sont étonnamment supérieurs à ceux de la présence individuelle de chacun de ces additifs.

La composition conforme à l'invention n'exclut pas l'utilisation d'autres additifs connus par l'homme de l'art, tels que par exemple, les anti-oxydants, les protecteurs anti-radiations UV, les colorants, les agents ignifugeants, les charges de renforcement, les plastifiants, etc., que le technicien sait doser de manière à ne pas affecter la performance de la composition faisant l'objet de l'invention.

Les exemples indiqués ci-après permettront de mieux comprendre l'invention, étant entendu qu'ils ne sont en aucune manière limitatifs.

La détermination du coefficient de frottement donné ici est conforme à la norme ASTM D 1894 avec la modification suivant : le film de polymère et son support doivent être remplacés par une éprouvette en polyester injecté mesurant 127 x 50 x 5 mm.

La mesure du coefficient de frottement statique correspond à la valeur maximale atteinte avant d'agiter l'éprouvette, et la mesure du coefficient de frottement dynamique correspond à la donnée enregistrée pendant que l'on agite l'éprouvette. En l'occurrence, on enregistre le coefficient de frottement polyester/polyester (MAT/MAT) et polyester/acier inox (MAT/INOX).

La détermination de la résistance à l'abrasion est faite par mise en oeuvre de deux techniques d'abrasion : l'abrasion Gardner à l'abrasion Taber.

L'abrasion Gardner est conduite en s'inspirant des conditions de la norme ASTM D 2486-79 qui ont été mofifiées comme indiqué ci-après :

Généralement, le dispositif d'abrasion mis en oeuvre consiste dans une brosse appropriée effectuant plusieurs cycles de déplacements de 350 mm sur une plaque de verre revêtue par exemple d'une couche de peinture dont on veut examiner la résistance à l'abrasion.

Cette méthode a été modifiée de la manière suivante :
- à la place de la couche de peinture, on a placé une feuille de papier de verre de la Société CARBORUNDUM de granulométrie 600 sur la plaque de verre,
- à la place de la brosse, on a adapté un support sur lequel sont fixées 2 éprouvettes du matériau à analyser ; ces éprouvettes ont chacune une forme de disque de diamètre = 35 mm et d'épaisseur = 10 mm et elles ont été confectionnées par moulage par injection.

La durée de l'abrasion est de 15 minutes pendant lesquelles chaque éprouvette effectue un déplacement de 350 mm ; un essai complet consiste à abraser les 2 éprouvettes. Après chaque essai, on remplace le papier de verre. A noter que durant chaque essai, un dispositif d'air comprimé travaillant à pression constante permet d'éviter l'accumulation de la poudre formée par l'abrasion. On a pesé les disques avant et après l'abrasion et la perte de poids en mg, calculée après chaque essai, correspond à la mesure de la résistance à l'abrasion (cette valeur est inversement proportionnelle à la résistance).

Il existe un autre type de test permettant de déterminer la résistance à l'abrasion, et qui a été utilisé. Ils s'agit

3

de l'abrasion Taber, décrite dans la norme ASTM D 1044. Dans ce test, l'éprouvette est maintenue par un support rotatif qui s'use sous l'effet d'une poudre abrasive (CS-17) que l'on jette sur deux petites roues appuyées contre l'éprouvette. Après 1 000 cycles, on calcule les différentes masses.

Exemple 1 :

Sur le tableau I sont indiquées trois compositions (2, 3 et 4) de polytéréphtalate de butylène mélangé à du bisulfure de molybdène et/ou à de l'huile de silicone. Le matériau 1 est du polytéréphtalate de butylène et le matériau 5 est du polyacétal.

Tableau I :

| Composition : % en poids des constituants dans composition | 1 | 2 | 3 | 4 | 5 |
|---|---|---|---|---|---|
| Polytéréphtalate de butylène (PBT) | 100,00 | 97,561 | 97,561 | 97,561 | - |
| Bisulfure de molybdène | - | 2,439 | - | 1,453 | - |
| Huile de silicone | - | - | 2,439 | 0,986 | - |
| Polyacétal | - | - | - | - | 100,00 |

Observations relatives au tableau I :

1. Les quantités des composants indiqués sur le tableau I correspondent à leurs pourcentages en poids par rapport au mélange.

2. Le bisulfure de molybdène est utilisé sous forme de concentré représentant 33 % du poids du mélange, dans un véhicule à base d'acides gras, de point de fusion peu élevé, et de polymères thermoplastiques.

Les compositions mentionnées ci-avant ont été analysées, et leurs valeurs indiquées au tableau II correspondent à leurs coefficients de frottement et d'abrasion.

Tableau II :

| COMPOSITION | | | 1 | 2 | 3 | 4 | 5 |
|---|---|---|---|---|---|---|---|
| Abrasion Gardner modifiée Perte de poids en 15 min. avec papier de verre de granulométrie 600 (mg) | | | 34,00 | 35,00 | 32,00 | 28,00 | - |
| Coefficient de frottement | statique | MAT/MAT | 0,21 | 0,15 | 0,23 | 0,10 | - |
| | | MAT/INOX | 0,23 | 0,21 | 0,24 | 0,15 | 0,2 à 3 |
| | dynamique | MAT/MAT | 0,18 | 0,11 | 0,17 | 0,09 | - |
| | | MAT/INOX | 0,21 | 0,18 | 0,22 | 0,12 | 0,2 3 |
| Abrasion Taber Différence de poids en mg | | | 100 | 70 | 40 | 20 | 20 |

Observations relatives au tableau II :

1. Les valeurs indiquées pour le coefficient de frottement MAT/INOX du polyacétal sont extraites de catalogues commerciaux de producteurs. La Demanderesse n'a pas effectué de tests en laboratoire pour le polyacétal.

2. L'abrasion Taber est effectuée selon la norme ASTM D 1044 à l'aide d'un disque moyen contenant deux petites roues perpendiculaires qui sont en contact avec le disque. Dès que commence la rotation de ce dernier, l'on jette une poudre abrasive sur les deux petites roues. Après 1 000 cycles, on calcule les différences de poids.

La formule 4 illustre l'invention. Cette formule est caractérisée par une plus grande résistance à l'abrasion et par un coefficient de frottement moins élevé, et cela, comparativement aux formules 2 et 3, dans lesquelles l'huile de silicone et le bisulfure de molybdène sont utilisés séparément, ou par rapport au polyacétal ou au polytéréphtalate de butylène.

Les tests ont été répétés après le vieillissement des éprouvettes à 80°C dans une étuve, pendant deux semaines, sans modification sensible des résultats indiqués ci-avant.

**Revendications**

1/ Compositions thermoplastiques, caractérisées en ce qu'elles contiennent au moins un polyester thermoplastique, du bisulfure de molybdène et une huile de silicone.

2/ Compositions thermoplastiques, selon la revendication 1, caractérisée en ce que ledit polyester est choisi parmi les polytéréphtalates d'alkylène.

3/ Compositions thermoplastiques, selon la revendication 2, caractérisées en ce que ledit polyester est de préférence le polytéréphtalate de butylène.

4/ Compositions thermoplastiques, selon la revendication 1, caractérisées en ce que l'huile de silicone est de préférence le polydiméthylsiloxane avec groupes terminaux variables.

5/ Compositions thermoplastiques, selon la revendication 4, caractérisées en ce que la teneur en huile de silicone employée varie entre environ 0,1 et environ 15 % (pourcentages par rapport au poids de polyester).

6/ Compositions thermoplastiques, selon la revendication 5, caractérisées en ce que la teneur d'huile de silicone varie de préférence entre environ 0,2 et environ 10 % (pourcentages par rapport au poids de polyester).

7/ Compositions thermoplastiques, selon une quelconque des revendications 4 à 6, caractérisées en ce que la viscosité de l'huile de silicone varie entre environ 100 et 1 000.$10^{-3}$ Pa.s.

8/ Compositions thermoplastiques, selon la revendication 1, caractérisées en ce que la teneur en bisulfure de molybdène varie entre environ 0,05 et environ 15 % par rapport au poids du polyester.

9/ Compositions thermoplastiques, selon la revendication 8, caractérisées en ce que la teneur en bisulfure de molybdène varie entre environ 0,1 et environ 10 % par rapport au poids du polyester.

10/ Compositions thermoplastiques, selon la revendication 1, caractérisées en ce que la proportion entre l'huile de silicone et le bisulfure de molybdène en poids varie entre 1:100 et 100:1.

11/ Compositions thermoplastiques, selon la revendication 10, caractérisées en ce que la proportion entre l'huile de silicone et le bisulfure de molybdène en poids varie entre 1:50 et 50:1.

12/ Compositions thermoplastiques, selon la revendication 1, caractérisées en ce que la teneur en huile de silicone additionnée à la teneur en bisulfure de molybdène varie entre environ 0,15 et environ 30 % par rapport au poids du polyester.

13/ Compositions thermoplastiques, selon la revendication 12, caractérisées en ce que la teneur en huile de silicone additionnée à la teneur en bisulfure de molybdène varie entre environ 0,3 et environ 20 % par rapport au poids du polyester.

14/ Procédé d'obtention de compositions thermoplastiques, selon une quelconque des revendications 1 à 13, caractérisé par la réalisation d'un mélange d'au moins un polyester thermoplastique, d'huile de silicone et de bisulfure de molybdène.

15/ Procédé d'obtention de compositions thermoplastiques, selon la revendication 14, caractérisé en ce que ledit mélange est effectué dans une extrudeuse.

16/ Procédé d'obtention de compositions thermoplastiques, selon la revendication 14, caractérisé en ce que ce mélange est effectué au moment de l'injection pour faire des pièces par moulage.